(19) Europäisches Patentamt
European Patent Office
Office européen des brevets

(11) Veröffentlichungsnummer: **0 458 204 A2**

(12) **EUROPÄISCHE PATENTANMELDUNG**

(21) Anmeldenummer: **91108004.2**

(22) Anmeldetag: **17.05.91**

(51) Int. Cl.5: **D01H 9/18**

(30) Priorität: **22.05.90 DE 4016509**

(43) Veröffentlichungstag der Anmeldung:
**27.11.91 Patentblatt 91/48**

(84) Benannte Vertragsstaaten:
**CH DE FR IT LI**

(71) Anmelder: **Zinser Textilmaschinen GmbH**
**Hans-Zinser-Strasse Postfach 1480**
**W-7333 Ebersbach/Fils(DE)**

(72) Erfinder: **Güttler, Hermann, Dipl.-Ing. (FH)**
**Porschestrasse 5**
**W-7336 Uhingen(DE)**

(54) **Transportsystem für Vorgarnspulen.**

(57) Die Erfindung betrifft ein Transportsystem für Vorgarnspulen, mit mindestens eine Laufrolle aufweisenden Hängehaltern, die mittels Distanztellern entlang einer mit Abzweigungen versehenen Rollenbahn verschiebbar sind, wobei der jeweilige Distanzteller in Laufrichtung des Hängehalters 5 zur Vertikalachse A-A des Hängehalters 5 versetzt angeordnet sind.

Fig.1

Die Erfindung bezieht sich auf ein Transportsystem für Vorgarnspulen, mit mindestens eine Laufrolle aufweisenden Hängehaltern, die mittels Distanztellern entlang einer mit Abzweigungen versehenen Rollenbahn verschiebbar sind.

Als Stand der Technik ist bereits ein derartiges Transportsystem für Vorgarnspulen an Spinnmaschinen bekannt, wobei einzelne Rollhängehalter für die Vorgarnspulen eingesetzt werden, welche Distanzscheiben aufweisen, mittels derer Züge von Rollhängehaltern geschoben werden können, ohne daß sich die Vorgarnspulen berühren (DE-OS 36 01 832). Die Distanzscheiben weisen hierzu einen größeren Durchmesser auf als die vollen Vorgarnspulen. Diese Rollhängehalter sind in Schienen geführt, welche zum Ausleiten einzelner Rollhängehalter Weichen benötigen. Hierdurch ergibt sich eine Verteuerung und ein größerer baulicher Aufwand des Schienensystems für die Rollhängehalter.

Zum Stand der Technik zählt es weiterhin, einen Träger für Vorgarnspulen mit einer kreisförmigen, in Arbeitsposition im wesentlichen horizontalen Tragscheibe auszustatten, welche an ihrer Unterseite ein lösbares Verbindungsmittel für eine Vorgarnspule aufweist (Europäische Patentanmeldung 0 329 965).

Demgegenüber liegt der vorliegenden Erfindung die Aufgabe zugrunde, Rollhängehalter nach dem Oberbegriff des Patentanspruches 1 so zu gestalten, daß sie ohne Weichen oder ohne größeren baulichen Aufwand in abzweigenden Bahnen geleitet werden können.

Diese Aufgabe wird erfindungsgemäß dadurch gelöst, daß der jeweilige Distanzteller in Laufrichtung des Hängehalters zur Vertikalachse des Hängehalters versetzt angeordnet ist. Dieser Versatz wirkt vorteilhafterweise als Lenker für die jeweilige Laufrolle und stellt die Achse der Laufrolle bzw. des Laufrollenpaares stets quer zu der Richtung, in welcher ein Schub auf die betreffende Distanzscheibe ausgeübt wird. Dadurch stellt sich die jeweilige Laufrolle immer in der Richtung ein, welche für eine Rollbewegung in Richtung der Schubkraft erforderlich ist.

Die Distanzscheibe kann starr am Hängehalter befestigt sein. In weiterer Ausgestaltung der Erfindung ist jedoch bevorzugt vorgesehen, die Distanzscheibe drehbar am Hängehalter zu lagern. Dadurch wird die Schwenkbewegung des Hängehalters erleichtert, da eine Relativbewegung zwischen Distanzscheibe und Hängehalter möglich ist. Die Distanzscheibe kann an einem zur Vertikalachse des Hängehalters exzentrischen Lager gelagert sein. In weiterer Ausgestaltung der Erfindung ist jedoch bevorzugt vorgesehen, die Distanzscheibe in einer Kröpfung des Hängehalters zu lagern. Dadurch wird der Lagerdurchmesser vermindert und durch Verringerung der Lagerreibung die Relativbewegung zwischen Distanzscheibe und Hängehalter ebenfalls erleichtert.

Die Erfindung ist besonders vorteilhaft anwendbar bei C-förmigen Rollenbahnen, welche zwei Laufrollen umschließen und durch deren unteren Schlitz der Hängehalter austritt. Hierbei liegt die eine Lagerstelle für den Distanzteller bildende Kröpfung des Hängehalters in der Mittelebene zwischen den beiden Laufrollen, bzw. bei nur einer Laufrolle in der die Lauffläche der Laufrolle enthaltenden Ebene. Der Durchmesser der Laufrollen ist vorteilhafterweise wesentlich größer als die Breite des zwischen den Rollenbahnen gebildeten Schlitzes, um das Hineinfallen der Laufrollen in den Schlitz der Rollenbahnen insbesondere beim Schwenken zu vermindern.

In weiterer Ausgestaltung der Erfindung kann im Bereich der Abzweigungen der Rollenbahn jeweils eine der Abzweigung in Höhe des Distanztellers gegenüberliegende Schubeinrichtung zur Beaufschlagung des Umfangs eines Distanztellers angeordnet sein.

Damit die Rollen bei der Schwenkbewegung nicht in den Spalt der Schiene fallen, besteht außerdem die Möglichkeit, daß die Laufrollen jeweils mit einem einen Rücklauf der Laufrollen verhindernden Freilauf versehen sind. Alternativ kann die Rollenbahn im Bereich der Abzweigungen jeweils mit einem einen Rücklauf der Laufrollen verhindernden Absatz versehen sein. Hierdurch wird in jeden Fall verhindert, daß die nicht über den Spalt schwenkende Laufrolle zurückrollt, sondern als Drehpunkt des Hängehalters beim Schwenken dient.

Die Erfindung wird nachfolgend anhand eines in der Zeichnung dargestellten Ausführungsbeispieles näher beschrieben. In der Zeichnung zeigen:

Fig. 1 eine schematische Seitenansicht eines Transportsystems für Vorgarnspulen im Ausschnitt und im Bereich einer Abzweigung

Fig. 2 eine Draufsicht auf die Ausführungsform nach Fig. 1, teilweise geschnitten.

Gemäß den Figuren weist ein Transportsystem für Vorgarnspulen 1, beispielsweise zwischen Vorspinnmaschine und Ringspinnmaschine, eine mit Abzweigungen 3 versehene Rollenbahn 2 auf. Diese Rollenbahn 2 ist bei dem Beispiel im Querschnitt C-förmig gestaltet. In der Rollenbahn laufen Laufrollenpaare 4, 4', welche je einen Hängehalter 5 tragen, in den Vorgarnspulen 1 eingehängt werden können. Unterhalb der Laufrollen 4, 4' befindet sich jeweils ein Distanzteller 6. Die Hängehalter 5 sind durch auf die Distanzteller ausgeübten Schub entlang der mit Abzweigung 3 versehenen Rollenbahn 2, 2' verschiebbar.

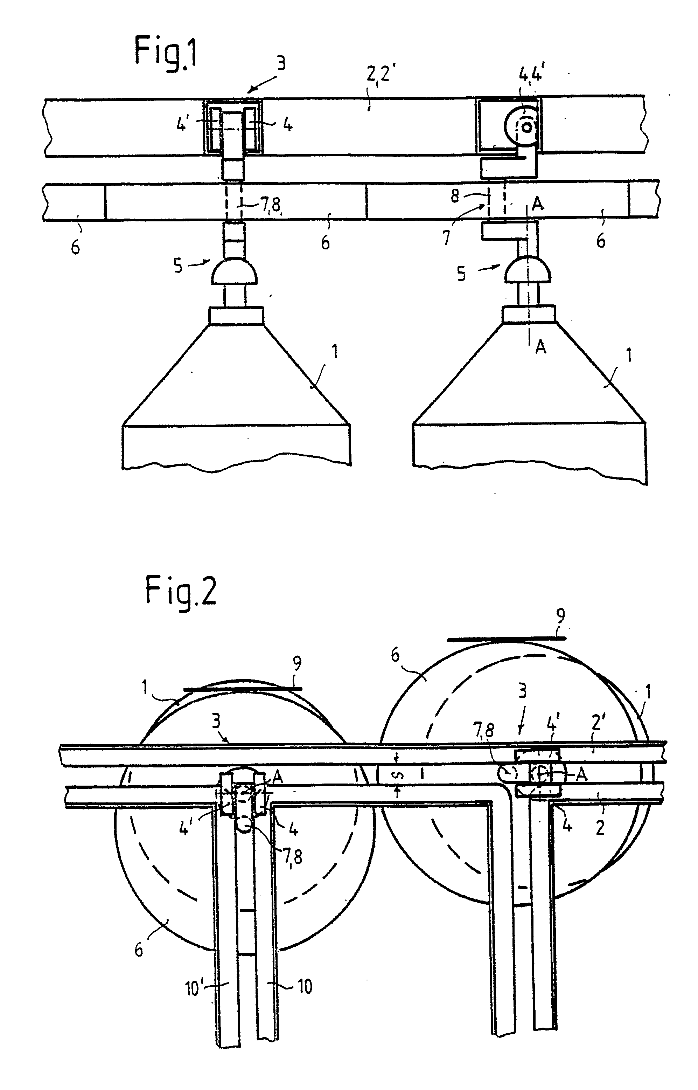

Wie aus Fig. 1 hervorgeht, ist der jeweilige Distanzteller 6 in Laufrichtung des Hängehalters 5 dadurch zur Vertikalachse A-A des Hängehalters 5 versetzt, daß er in einer Kröpfung 7 des Hängehalters 5 gelagert ist. Der Distanzteller 6 ist hierbei drehbar in der Kröpfung 7 des Hängehalters 5 gelagert.

Aus den Figuren geht weiterhin hervor, daß die eine Lagerstelle 8 für den Distanzteller 6 bildende Kröpfung 7 des Hängehalters 5 in der Mittelebene zwischen den beiden Laufrollen 4, 4' liegt, sodaß sie als Lenker für das Rollenpaar wirkt.

Die Konstruktion ist so getroffen, daß der Durchmesser der jeweiligen Laufrollen 4, 4' wesentlich größer ist als die Breite des zwischen den Rollenbahnen 2, 2' gebildeten Schlitzes S (s. Fig.2). Hierdurch wird verhindert, daß in unerwünschter Weise im Bereich der Abzweigung 3 die Laufrollen 4, 4' tief in den Schlitz zwischen den beiden Rollenbahnen 2, 2' fallen können, aus welcher Lage sie nur durch Anheben des Hängehalters 5 befreit werden könnten. Um weitere Vorsorge gegenüber dieser unerwünschten Erscheinung zu treffen, können erfindungsgemäß die Laufrollen 4, 4' jeweils mit einem nicht näher dargestellten, einen Rücklauf der Laufrollen verhindernden Freilauf versehen sein.

Alternativ besteht die Möglichkeit, daß die Rollenbahnen 2, 2' im Bereich der Abzweigung 3 jeweils mit einem einen Rücklauf der Laufrollen 4, 4' verhindernden Absatz versehen sind. Dadurch wird Vorsorge getroffen, daß die nicht über den Spalt im Bereich der Abzweigung schwenkende Rolle 4 bzw. 4' nicht zurückrollt, sondern als Drehpunkt des Hängehalters 5 beim Schwenken dient. Es werden damit unkontrollierte Drehbewegungen verhindert.

Im Bereich der Abzweigung 3 der Rollenbahnen 2, 2' befindet sich jeweils eine der Abzweigung 3 in Höhe des Distanztellers 6 gegenüberliegende Schubeinrichtung 9 zur Beaufschlagung des Umfanges eines Distanztellers 6. Diese Schubeinrichtung 9 ist in Fig. 2 schematisch dargestellt. Wie ersichtlich, wirkt diese Schubeinrichtung auf den Außenumfang des jeweiligen Distanztellers 6, wodurch dieser über die Lagerstelle 8, d.h. die Kröpfung 7 geschwenkt wird und hierbei eine Richtungsänderung um 90° erfährt, welche die Laufrollen 4, 4' mitvollziehen, sodaß diese aus der in Fig. 2 in rechter Position dargestellten Lage in die in Fig. 2 in der linken Position dargestellte Lage bewegt und damit aus der Rollenbahn 2, 2'in eine andere Rollenbahn 10, 10' überführt werden.

## Patentansprüche

1. Transportsystem für Vorgarnspulen, mit mindestens eine Laufrolle aufweisenden Hängehaltern, die mittels Distanztellern entlang einer mit Abzweigungen versehenen Rollenbahn verschiebbar sind, dadurch gekennzeichnet, daß

der jeweilige Distanzteller in Laufrichtung des Hängehalters (5) zur Vertikalachse (A-A) des Hängehalters (5) versetzt angeordnet sind.

2. Transportsystem nach Anspruch 1, dadurch gekennzeichnet, daß der Distanzteller (6) drehbar am Hängehalter (5) angeordnet ist.

3. Transportsystem nach Anspruch 2, dadurch gekennzeichnet, daß der Distanzteller (6) in einer Kröpfung (79 des Hängehalters (5) gelagert ist.

4. Transportsystem nach Anspruch 1 und 2, mit in C-förmigen Rollenbahnen laufenden, zwei Laufrollen aufweisenden Hängehaltern, dadurch gekennzeichnet, daß die eine Lagerstelle (8) für den Distanzteller (6) bildende Kröpfung (7) des Hängehalters (5) in der Mittelebene zwischen den beiden Laufrollen (4, 4') liegt.

5. Transportsystem nach Anspruch 4, dadurch gekennzeichnet, daß der Durchmesser der Laufrollen (4, 4') wesentlich größer als, insbesondere mindestens doppelt so groß ist wie die Breite des zwischen den Rollenbahnen (2, 2') gebildeten Schlitzes (S).

6. Transportsysteme nach einem hervorhergehenden Ansprüche, dadurch gekennzeichnet, daß im Bereich der Abzweigungen der Rollenbahnen (2, 2') jeweils eine der Abzweigung (3) in Höhe des Distanztellers (6) gegenüberliegende Schubeinrichtung (9) zur Beaufschlagung des Umfangs eines Distanztellers (6) angeordnet ist.

7. Transportsystem nach Anspruch 6, dadurch gekennzeichnet, daß die Laufrolle (4, 4') jeweils mit einem einen Rücklauf der Laufrollen verhindernden Freilauf versehen sind.

8. Transportsystem nach Anspruch 6, dadurch gekennzeichnet, daß die Rollenbahn (2, 2') im Bereich der Abzweigung (3) jeweils mit einem einen Rücklauf der Laufrollen (4, 4') verhindernden Absatz versehen ist.

Fig.1

Fig.2